# EUROPÄISCHE PATENTANMELDUNG

(11) **EP 4 254 235 A1**
(43) Veröffentlichungstag der Anmeldung: **04.10.2023**
(21) Anmeldenummer: 22165806.5
(22) Anmeldetag: 31.03.2022
(51) Int. Cl.: G06F 21/51, G06F 21/57, H04W 12/60, H04W 12/67, H04W 12/37

(54) **VERFAHREN ZUM AUSFÜHREN VON WORKLOAD (APP) IN EINER AUSFÜHRUNGSUMGEBUNG UND SYSTEM**

(71) Anmelder: Siemens Aktiengesellschaft, 80333 München (DE)
(72) Erfinder: Falk, Rainer, 85586 Poing (DE)
(74) Vertreter: Siemens Patent Attorneys

(57) **Zusammenfassung**

Bei dem Verfahren zum Ausführen von Workload (APP) in einer Ausführungsumgebung (APPRTE, IOM) wird der Workload mittels einer Zulässigkeitsliste zulässigen Workloads zum Ausführen zugelassen, wobei bei dem Verfahren eine Risikoinformation, kennzeichnend ein IT-Sicherheitsrisiko der Ausführungsumgebung, ermittelt wird und abhängig von der ermittelten Risikoinformation die Zulässigkeitsliste zulässigen Workloads geändert wird.

## Beschreibung

Die Erfindung betrifft ein Verfahren zum Ausführen von Workload in einer Ausführungsumgebung sowie ein System mit einer zum Ausführen von Workload ausgebildeten Ausführungsumgebung.

In Ausführungsumgebungen, etwa auf Compute-Plattformen, wie Industrie-PCs oder Edge-Cloud-Compute-Servern, werden unterschiedliche und teilweise kritische Software-Komponenten ausgeführt. Insbesondere können kritische Funktionalitäten, etwa in Form von Apps und/oder Containern oder nativen Software-Komponenten, auf offenen Compute-Plattformen realisiert sein. Allgemein können solche Apps, Container und sonstige Software-Komponenten auch als "Workload" bezeichnet werden.

Es kann jedoch nicht verhindert werden, dass kritischer Workload auf einer Compute-Plattform ausgeführt wird, die die erforderliche Vertrauenswürdigkeit nicht gewährleistet.

Es ist daher Aufgabe der Erfindung, ein verbessertes Verfahren zum Ausführen von Workload in einer Ausführungsumgebung und ein verbessertes System mit einer zum Ausführen von Workload ausgebildeten Ausführungsumgebung zu schaffen. Insbesondere soll bei dem Verfahren und bei dem System ein Ausführen von Workload auch auf einer nicht von vornherein als vertrauenswürdig einzustufenden Ausführungsumgebung möglich sein.

Diese Aufgabe der Erfindung wird mit einem Verfahren mit den in Anspruch 1 angegebenen Merkmalen sowie mit einem System mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Ausführen von Workload in einer Ausführungsumgebung wird der Workload mittels einer Zulässigkeitsliste zulässigen Workloads zum Ausführen zugelassen, wobei bei dem Verfahren eine Risikoinformation, die ein IT-Sicherheitsrisiko der Ausführungsumgebung kennzeichnet, ermittelt wird und abhängig von der ermittelten Risikoinformation die Zulässigkeitsliste zulässigen Workloads geändert wird. Besonders bevorzugt ist das Verfahren ein computer-implementiertes Verfahren.

Erfindungsgemäß muss also nicht von vornherein darauf vertraut werden, dass die Ausführungsumgebung vertrauenswürdig ist, sondern ein Workload wird erfindungsgemäß nur dann in der Ausführungsumgebung ausgeführt, wenn deren Vertrauenswürdigkeit ermittelt und geprüft worden ist, wenn dann eine Zulässigkeitsliste für zulässigen Workload abhängig von der geprüften Vertrauenswürdigkeit ausgewählt worden ist und nachfolgend der Workload in dieser Zulässigkeitsliste verzeichnet ist. Es wird also bei dem erfindungsgemäßen Verfahren vorteilhaft ein "Zero Trust"-Paradigma der Netzwerk-Security auf die Ausführung von Workloads in einer Ausführungsumgebung übertragen. Folglich kann mittels des erfindungsgemäßen Verfahrens eine dem Risiko der Ausführungsumgebung und folglich eine der Vertrauenswürdigkeit der Ausführungsumgebung angepasste Zulässigkeitsliste verwendet werden. Geeigneterweise handelt es sich bei dem Workload um Software-Komponenten. Die Ausführungsumgebung ist vorzugsweise eine Compute-Plattform, insbesondere eine offene Compute-Plattform. Gerade bei Ausführungsumgebungen, welche mittels offener Compute-Plattformen gebildet sind und folglich höhere Risiken für Manipulationen oder Angriffe beinhalten, ist mittels des erfindungsgemäßen Verfahrens vorteilhaft eine fortlaufende Anpassung der Zulässigkeitsliste an die Risikoinformation der Compute-Plattform möglich. Vorzugsweise wird bei dem erfindungsgemäßen Verfahren mit der geänderten Zulässigkeitsliste der Workload ausgeführt. Insbesondere beinhaltet der der Workload eine Steuerfunktionalität eines Fertigungs- oder Wartungsprozesses, sodass mittels des erfindungsgemäßen Verfahrens die Steuerfunktionalität ausgeführt werden kann und der Fertigungs- oder Wartungsprozess gesteuert und ausgeführt werden kann.

Bevorzugt umfasst bei dem erfindungsgemäßen Verfahren der Workload eines oder mehrere der Elemente der nachfolgend aufgeführten Liste: eine virtuelle Maschine, ein Betriebssystem-Container, insbesondere ein Linux LXC oder ein Docker-Container oder eine Container-basierte App, eine native Betriebssystem-Applikation, ein Service, insbesondere ein Unix-Dämon oder ein Windows-Service, ein Betriebssystem-Modul, vorzugsweise ein durch den Linux-Kernel dynamisch ladbares Betriebssystem-Modul.

Die vorgenannten Software-Komponenten können auf der Ausführungsumgebung zum einen selbst gespeichert, bevorzugt installiert, sein oder von einem verbundenen Netzwerkspeicher in die Ausführungsumgebung zur Ausführung geladen werden. Erfindungsgemäß wird eine Software-Komponente nur dann gestartet, d. h. ausgeführt und/oder in den Arbeitsspeicher geladen, wenn sie durch eine die Zulässigkeitsliste als zulässig definiert ist.

Bei dem erfindungsgemäßen Verfahren bedeutet die Risikoinformation zugleich einen Host-Trust-Status der Ausführungsumgebung. Denn je höher das Risiko ist, das die Risikoinformation für die Ausführung angibt, umso weniger vertrauenswürdig ist die Ausführungsumgebung.

Bevorzugt wird bei dem erfindungsgemäßen Verfahren im laufenden Betrieb der Ausführungsumgebung die jeweilige Risikoinformation der Ausführungsumgebung ermittelt und davon abhängig die Zulässigkeitsliste geändert, insbesondere ausgewählt oder gebildet. In dem Fall, dass eine Zulässigkeitsliste ausgewählt wird, sind mehrere Zulässigkeitslisten vorhanden, von denen eine Zulässigkeitsliste abhängig von der Risikoinformation der Ausführungsumgebung ausgewählt wird. In dem Fall, dass die Zulässigkeitsliste gebildet wird, wird eine von der ermittelten Risikoinformation der Ausführungsumgebung abhängende Zulässigkeitsliste derart ermittelt, dass nur solcher Workload Eingang in die Zulässigkeitsliste findet, welche mit der ermittelten Risikoinformation der Ausführungsumgebung verträglich ist. So kann eine Datenbank vorgehalten werden, die für jeden Workload, d. h. für jede Softwarekomponente, vermerkt, bei welcher Risikoinformation der Ausführungsumgebung der Workload Eingang in die Zulässigkeitsliste finden kann und bei welcher Risikoinformation nicht. Zweckmäßig umfasst die Risikoinformation einen Zahlenwert und für jeden Workload ist in der Datenbank vermerkt, ab welchem oder bis welchen Zahlenwert der Workload in die Zulässigkeitsliste aufgenommen werden kann. Auf diese Weise kann einfach eine Zulässigkeitsliste automatisiert generiert werden.

Zweckmäßig wird bei dem erfindungsgemäßen Verfahren derjenige bereits gestartete Workload oder es werden diejenigen Software-Komponenten angehalten oder beendet, wenn deren Ausführung gemäß der aktualisierten Zulässigkeitsliste nicht mehr zulässig ist. Eine bereits gestartete Software-Komponente kann also davon abhängig angehalten, beendet oder auf einen anderen Host migriert werden, ob die Zulässigkeitsliste aufrechterhalten wird oder geändert worden ist.

Vorzugsweise enthält die Zulässigkeitsliste eine Berechtigungsinformation, d. h. eine Information darüber, welche Laufzeitberechtigungen einem Workload, insbesondere einer jeweiligen Software-Komponente, gewährt werden, etwa Linux-Capabilities, Mandatory-Access-Control-Policies oder Zugriffsberechtigung auf bestimmte Hardware-Komponenten des Compute-Servers wie insbesondere auf einen Vertrauensanker zum Speichern und Bereitstellen von kryptographischen Schlüsseln und Funktionen oder auf einen Grafikbeschleuniger oder auf einen AI-Beschleuniger.

In einer bevorzugten Weiterbildung des erfindungsgemäßen Verfahrens umfasst die Ausführungsumgebung eine Laufzeitumgebung, insbesondere für Workload in Gestalt von Softwarekomponenten, vorzugsweise in Form von Containern und/oder Apps.

Bei dem Verfahren gemäß einer Weiterbildung der Erfindung umfasst bevorzugt die Ausführungsumgebung ein Betriebssystem und/oder mindestens ein Input-Output-Modul und/oder eine Signalverbindung und/oder einen Switch und/oder einen Router.

Bei dem erfindungsgemäßen Verfahren wird die die Risikoinformation zweckmäßig mittels der Ausführungsumgebung oder mittels einer Vorrichtung, in welcher die Ausführungsumgebung befindlich ist, oder mittels einer Software, welche in der Ausführungsumgebung läuft, ermittelt.

Die Risikoinformation der Ausführungsumgebung kann auf der Ausführungsumgebung selbst ermittelt werden, insbesondere mittels einer speziellen Software-Komponente, die insbesondere in einem "Trusted Execution Environment", kurz als "TEE" bezeichnet, der Ausführungsumgebung ausgeführt wird, geeigneterweise ein Intel SGX oder eine Arm-TrustZone, oder mittels eines Hardware-Erweiterungsmoduls, etwa einer Einsteckkarte wie insbesondere einer PCIe-Karte, oder mittels einer integrierten Hardware-Komponente der Ausführungsumgebung oder mittels eines Backend-/Edge-Cloud-Services. Alternativ oder zusätzlich kann die Risikoinformation der Ausführungsumgebung mittels einer mit der Ausführungsumgebung kommunikationsverbundenen Vorrichtung oder Plattform ermittelt werden.

Bei dem Verfahren ist in einer bevorzugten Weiterbildung der Erfindung die Zulässigkeitsliste eine Positivliste, d. h. es sind die zur Ausführung zugelassenen Software-Komponenten in der Zulässigkeitsliste verzeichnet.

Geeigneterweise wird bei dem erfindungsgemäßen Verfahren die Zulässigkeitsliste kryptographisch geschützt. In dieser Weiterbildung kann die Zulässigkeitsliste vorteilhaft nicht ohne Weiteres unbeabsichtigt oder infolge eines Manipulationsversuchs eines Angreifers geändert werden. Folglich ist in dieser Weiterbildung das erfindungsgemäße Verfahren besonders sicher. Ein kryptographischer Schutz der Zulässigkeitsliste kann insbesondere mittels einer digitalen Signatur der Zulässigkeitsliste, etwa seitens eines ggf. vorhandenen Zulässigkeitslistenanpassungsmoduls, wie es unten beschrieben ist erfolgen. Auf diese Weise müssen Angreifer, die die Zulässigkeitsliste manipulieren wollen, nicht allein die Zulässigkeitsliste manipulieren, sondern müssen auch die digitale Signatur oder das ggf. vorhandene Zulässigkeitslistenanpassungsmodul manipuliert werden. Alternativ oder zusätzlich kann die Zulässigkeitsliste mittels eines kryptographischen Schlüssels verschlüsselt vorgehalten werden, sodass die Zulässigkeitsliste nur bei einer gleichzeitigen Manipulation oder Kompromittierung des kryptographischen Schlüssels oder eines zum kryptographischen Schlüssel zugehörigen privaten Schlüssels erfolgen kann. Die Zulässigkeitsliste kann insbesondere mittels eines kryptographischen Prüfwerts, etwa einer kryptographischen Prüfsumme, oder mittels einer authentisierenden Verschlüsselung geschützt sein. Die Zulässigkeitsliste liegt zweckmäßig in Form eines sogenannten "Verifiable Credentials" oder einer "Verifiable Presentation" vor. Alternativ oder zusätzlich kann die Zulässigkeitsliste in einer verteilten Datenbank, insbesondere in einem Distributed Ledger oder einer Blockchain, abgelegt sein oder es kann ein Prüfwert der Zulässigkeitsliste in dem Distributed Ledger oder in der Blockchain hinterlegt sein.

Alternativ oder zusätzlich ist die Zulässigkeitsliste mittels eines kryptographisch geschützten Kommunikationskanals geschützt, vorzugsweise mittels TLS und/oder HTTPS.

Beim erfindungsgemäßen Verfahren kann vorzugsweise eine erste Version der Zulässigkeitsliste beim Gerätehochlauf, insbesondere beim Booten, der Ausführungsumgebung bestimmt werden. Dazu kann die Zulässigkeitsliste insbesondere von einem nichtflüchtigen Speicher oder von einem Server geladen werden.

Im laufenden Betrieb der Ausführungsumgebung wird die Zulässigkeitsliste bevorzugt wiederholt aktualisiert, d. h. das erfindungsgemäße Verfahren wird bevorzugt wiederholt ausgeführt. Dies kann insbesondere zeitgesteuert, vorzugsweise in gleichbleibenden zeitlichen Abständen, oder alternativ und ebenfalls bevorzugt bei bestimmten Ereignissen erfolgen, insbesondere bei einer Änderung der Konfiguration oder einer Änderung installierter Software, bei einer Installation eines Patches oder bei einem Anmelden oder Abmelden eines Nutzers, insbesondere eines Administrators oder privilegierten Nutzers, etwa eines Nutzers mit Root-Privilegien. Bei einem Ausbleiben einer Aktualisierung oder einem Ausbleiben einer Gültigkeitsbestätigung der Zulässigkeitsliste über einen festgelegten Zeitraum kann optional und vorteilhaft eine lokal gespeicherte Ersatz-Zulässigkeitsliste vorgesehen sein.

Bevorzugt kann bei dem erfindungsgemäßen Verfahren zusätzlich zur ermittelten Risikoinformation der Ausführungsumgebung eine Risikoinformation von weiteren mit der Ausführungsumgebung kommunikationsverbundenen Komponenten ermittelt und bei der Bildung der Zulässigkeitsliste der Ausführungsumgebung berücksichtigt werden. Die kommunikativ verbundenen Komponenten können insbesondere Ein-/Ausgabe-Module sein, über die eine in der Ausführungsumgebung ausführbare Steuerungs-Applikation auf physikalische Sensoren und/oder Aktuatoren direkt oder mittels eines Datennetzwerks, zweckmäßig mittels Ethernet TSN, mittels 5G-Mobilfunks, HART, Profinet, OPC UA, zugreifen kann.

Das erfindungsgemäße System mit einer Ausführungsumgebung ist zum Ausführen von Workload in der Ausführungsumgebung ausgebildet. Bei dem erfindungsgemäßen System ist eine Zulässigkeitsliste zulässigen Workloads vorhanden und das System ist zur Ausführung von Workload gemäß der Zulässigkeitsliste ausgebildet. Zusätzlich weist das erfindungsgemäße System ein Risikoermittlungsmodul zum Ermitteln einer Risikoinformation, kennzeichnend ein IT-Sicherheitsrisiko der Ausführungsumgebung, sowie ein Zulässigkeitslistenanpassungsmodul, das ausgebildet ist, die Zulässigkeitsliste zulässigen Workloads abhängig von der Risikoinformation zu ändern, auf.

Das erfindungsgemäße System bildet zweckmäßig eine einstückige oder einteilige oder einstückig oder einteilig handhabbare Vorrichtung.

Besonders bevorzugt ist das erfindungsgemäße System zur, insbesondere wiederholten oder fortlaufenden, Ausführung eines erfindungsgemäßen Verfahrens wie zuvor beschrieben ausgebildet. Das erfindungsgemäße System weist dabei die entsprechenden Vorteile, wie sie bereits zum erfindungsgemäßen Verfahren beschrieben und erläutert sind, auf.

Bevorzugt wird das erfindungsgemäße Verfahren wie oben beschrieben mit einem erfindungsgemäßen System wie vorhergehend beschrieben ausgeführt.

Nachfolgend wird die Erfindung anhand eines in der Zeichnung dargestellten Ausführungsbeispiels näher erläutert. Es zeigen:
- Fig. 1: ein Ausführungsbeispiel eines erfindungsgemäßen Systems zum Ausführen von Workload in einer Ausführungsumgebung zur Ausführung eines erfindungsgemäßen Verfahrens zum Ausführen von Workload in dieser Ausführungsumgebung schematisch in einer Prinzipskizze sowie
- Fig. 2: den Ablauf des erfindungsgemäßen Verfahrens schematisch in einem Ablaufdiagramm.

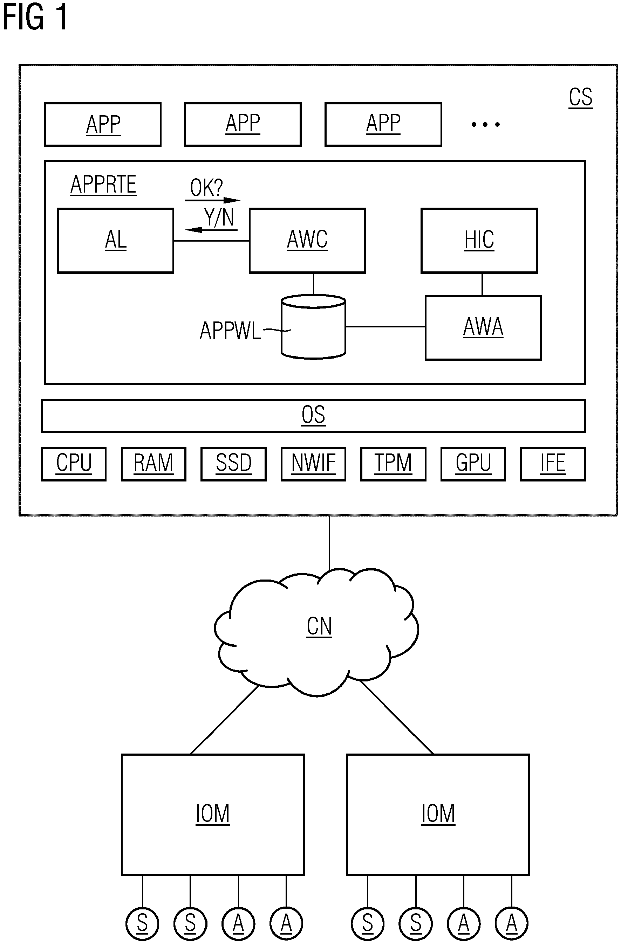

Bei dem in Fig. 1 gezeigten erfindungsgemäßen Automatisierungssystem weist eine offene Compute-Plattform CS eine Laufzeitumgebung APPRTE auf, in welcher mehrere Apps APP, im dargestellten Ausführungsbeispiel Linux-Container oder virtuelle Maschinen, ausgeführt werden.

Die offene Compute-Plattform CS weist zudem ein Betriebssystem OS sowie einige Hardware-Komponenten, im dargestellten Ausführungsbeispiel einen Prozessor CPU, einen Arbeitsspeicher RAM, einen Festplattenspeicher SSD, eine Netzwerkschnittstelle NWIF, einen Hardware Trust Anchor TPM, einen Grafikbeschleuniger GPU und einen AI-Beschleuniger IFE auf.

Eine der Apps APP realisiert beispielsweise eine Steuergeräte-Funktionalität in Gestalt eines virtuellen speicherprogrammierbaren Bausteines, welche mittels eines Steuernetzwerks CN und mittels Input-Output-Modulen IOM auf Sensoren S und Aktuatoren A zugreift. Eine App APP kann nur dann ausgeführt, d. h. gestartet und in den Arbeitsspeicher RAM geladen, werden, wenn sie gemäß einer in der Ausführungsumgebung gespeicherten Softwarekomponenten-Whitelist APPWL zulässig ist. Die Ausführungsumgebung wird dabei mittels der Laufzeitumgebung APPRTE realisiert. Die App-Whitelist APPWL wird im laufenden Betrieb wiederholt abhängig von einer Risikoinformation, die ein IT-Sicherheits-Risiko der Laufzeitumgebung APPRTE angibt, aktualisiert. Die Risikoinformation gibt bei einem geringen IT-Sicherheits-Risiko zugleich eine hohe Vertrauenswürdigkeit der Laufzeitumgebung APPRTE an. Umgekehrt gibt ein hohes IT-Sicherheits-Risiko eine geringe Vertrauenswürdigkeit der Laufzeitumgebung APPRTE an. Insofern ist die Risikoinformation äquivalent mit einer Trust-Status-Information der Laufzeitumgebung APPRTE.

Zusätzlich zur Risikoinformation der Laufzeitumgebung APPRTE kann bei dem erfindungsgemäßen Automatisierungssystem eine Risikoinformation der IO-Module IOM und eine Risikoinformation der Sensoren S, sowie eine Risikoinformation der Aktuatoren A und/oder des Steuernetzwerks CN oder einzelner Netzwerkkomponenten des Steuernetzwerks CN, beispielsweise eines Switchs und/oder eines Routers und/oder einer Verkabelung und/oder eines WLAN-Access-Points und/oder einer 5G-Mobilfunk-Basisstations berücksichtigt werden. Denn auch die weiteren vorgenannten Elemente gehören, zusätzlich zur Laufzeitumgebung APPRTE, zur Ausführungsumgebung der offenen Compute-Plattform CS.

Die vorgenannten Risikoinformationen werden bei dem erfindungsgemäßen Automatisierungssystem fortlaufend ermittelt und abhängig von den Risikoinformationen wird die Softwarekomponenten-Whitelist APPWL jeweils angepasst.

Dies geschieht bei der Compute-Plattform CS wie folgt: Mittels eines softwarebasierten Integritätsprüfmoduls HIC wird die Integrität der Compute-Plattform CS geprüft und die Risikoinformation ermittelt. Eine hohe Integrität bedeutet ein geringes IT-Sicherheits-Risiko und umgekehrt. Abhängig von der ermittelten Risikoinformation wird bei der Compute-Plattform CS die Softwarekomponenten-Whitelist APPWL mittels eines Whitelistanpassungsmoduls AWA angepasst. Ein Anwendungslauncher AL, der eine App APP wie vorgenannt zu starten beabsichtigt, prüft zunächst mittels einer Anfrage OK? an ein Prüfmodul AWC, ob die App APP in der Softwarekomponenten-Whitelist APPWL als für die Ausführung in der Laufzeitumgebung APPRTE zulässig verzeichnet ist. Das Prüfmodul AWC übermittelt die Antwort Y/N zurück an den Anwendungslauncher AL. Ist die App APP in der Softwarekomponenten-Whitelist APPWL enthalten, so wird die App APP vom Anwendungslauncher AL gestartet.

Andere kritische Apps APP, die nur abhängig vom Trust-Status des Hosts ausgeführt werden, d.h. durch die jeweils entsprechend angepasste Software-Komponenten-Whitelist zugelassen werden, sind z.B. eine Verschlüsselungs-App zum Verschlüsseln oder Entschlüsseln von Daten oder einer Netzwerkübertragung, eine App zum Onboarding oder Provisionieren anderer Geräte, oder eine App zum Anlernen eines AI-Modells.

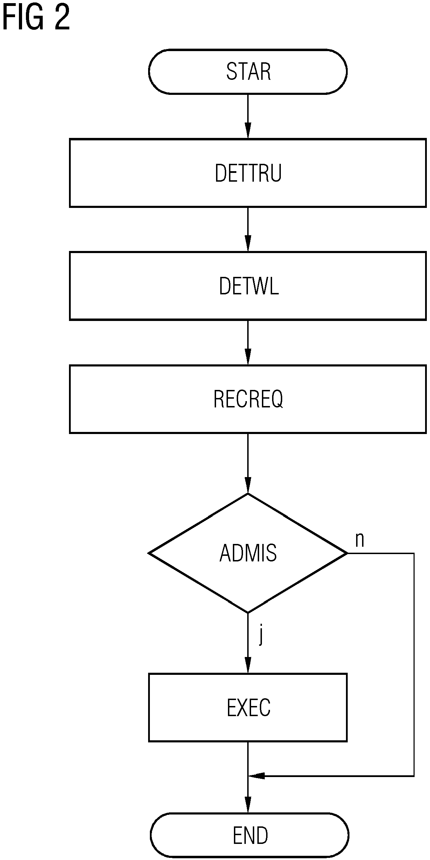

In Fig. 2 ist das Verfahren in einem Ablaufdiagramm noch einmal kompakt dargestellt:
In einem Initiierungsschritt STAR wird das Verfahren angestoßen. Dieser Initiierungsschritt STAR kann beispielsweise regelmäßig in gleichbleibenden zeitlichen Abständen oder bedarfsangepasst, etwa bei Änderungen der Ausführungsumgebung oder bei Änderungen der Vorrichtung, in welcher die Ausführungsumgebung implementiert ist, erfolgen.

In einem Ermittlungsschritt DETTRU wird eine Risikoinformation der Ausführungsumgebung ermittelt, die das IT-Sicherheitsrisiko der Ausführungsumgebung quantifiziert, im dargestellten Ausführungsbeispiel mittels des Integritätsprüfmoduls HIC.

Abhängig von dieser Risikoinformation wird die zur Risikoinformation zugehörige Softwarekomponenten-Whitelist APPWL von zulässigem Workload, im dargestellten Ausführungsbeispiel von zulässigen Applikationen APP, welche in der Laufzeitumgebung APPRTE ausgeführt werden dürfen, ausgewählt. Dazu bildet die Risikoinformation im dargestellten Ausführungsbeispiel eine Risikomaßzahl, welche bei einem hohen Zahlenwert der Risikomaßzahl ein großes Risiko und bei einem kleinen Zahlenwert ein geringes Risiko angibt. Der Wertebereich der Werte, die die Risikomaßzahl annehmen kann, ist in Werteintervalle eingeteilt. Jedem Werteintervall ist eine bestimmte Softwarekomponenten-Whitelist APPWL zugeordnet, die somit leicht anhand der Risikomaßzahl bestimmt werden kann. Sämtliche Software-komponenten-Whitelists APPWL der unterschiedlichen Werteintervalle unterscheiden sich voneinander. Je höher die Risikomaßzahlen eines Werteintervalls sind, umso weniger Einträge weist die Softwarekomponenten-Whitelist auf. Mit steigender Risikomaßzahl werden jeweils noch bestehende Einträge von Softwarekomponenten-Whitelists APPWL des jeweils in ansteigender Richtung vorhergehenden Werteintervalls ausgenommen. Mittels dieser Zuordnungsvorschrift wird nun anhand der Risikomaßzahl in einem Bestimmungsschritt DETWL die zugeordnete Softwarekomponenten-Whitelist APPWL bestimmt.

Bei dem dargestellten Ausführungsbeispiel sind sämtliche Softwarekomponenten-Whitelists APPWL kryptographisch geschützt und seitens eines Anwenders der Compute-Plattform CS zusätzlich mittels einer digitalen Signatur signiert.

Mittels der so bestimmten Softwarekomponenten-Whitelist APPWL kann nun auf eingehende Anfragen RECREQ zur Ausführung eines Workloads adäquat reagiert werden: Bei jeder Anfrage RECREQ wird der jeweils zur Ausführung angefragte Workload mit der mittels des Bestimmungsschritts DETWL bestimmten Softwarekomponenten-Whitelist APPWL abgeglichen und es wird in einem Prüfschritt ADMIS geprüft, ob der angefragte Workload in der Softwarekomponenten-Whitelist APPWL mit einem Eintrag als zulässig verzeichnet ist. Wird dies bestätigt j, so wird der angefragte Workload in einem Ausführungsschritt EXEC mittels des Anwendungslaunchers AL ausgeführt. Ist der angefragte Workload mit keinem Eintrag in der Softwarekomponenten-Whitelist APPWL als zulässig verzeichnet, so endet der Prüfschritt ADMIS mit einer Versagung n der Ausführung und das Verfahren endet mit einem Beendigungsschritt END, ohne dass der Ausführungsschritt EXEC unternommen wird.

Im dargestellten Ausführungsbeispiel prüft der Anwendungslauncher AL zusätzlich, ob die Softwarekomponenten-Whitelist APPWL den geforderten kryptographischen Schutz aufweist und ob die digitale Signatur der Softwarekomponenten-Whitelist gültig ist.

Es versteht sich, dass in weiteren, nicht eigens dargestellten Ausführungsbeispielen keine Softwarekomponenten-Whitelist APPWL in der Art einer Positivliste zulässigen Workloads vorgesehen sein muss, sondern es kann alternativ eine Blacklist von Ausnahmen von zulässigem Workload vorgesehen sein, welche abhängig von der Risikoinformation angepasst wird.

## Patentansprüche

1. Verfahren zum Ausführen von Workload (APP) in einer Ausführungsumgebung (APPRTE, IOM), bei welchem der Workload mittels einer Zulässigkeitsliste (APPWL) zulässigen Workloads zum Ausführen zugelassen wird, wobei bei dem Verfahren eine Risikoinformation, kennzeichnend ein IT-Sicherheitsrisiko der Ausführungsumgebung, ermittelt (DETTRU) wird und abhängig von der ermittelten Risikoinformation die Zulässigkeitsliste zulässigen Workloads geändert (DETWL) wird.

2. Verfahren nach dem vorhergehenden Anspruch, bei welchem Workload eines oder mehrere Elemente der nachfolgend aufgeführten Liste umfassen kann: eine virtuelle Maschine, Betriebssystem-Container, insbesondere ein Linux LXC oder ein Docker-Container oder eine Container-basierte App, eine native Betriebssystem-Applikation, ein Service, insbesondere ein Unix Demon oder ein Windows-Service, ein Betriebssystem-Modul, vorzugsweise ein durch den Linux-Kernel dynamisch ladbares Betriebssystem-Modul.

3. Verfahren nach einem der vorhergehenden Ansprüche, bei welchem die Ausführungsumgebung (APPRTE, IOM) eine Laufzeitumgebung (APPRTE), insbesondere für Workload in Gestalt von Softwarekomponenten, vorzugsweise in Form von Containern und/oder Apps (APP), umfasst.

4. Verfahren nach einem der vorhergehenden Ansprüche, bei welchem die Ausführungsumgebung (APPRTE, IOM) ein Betriebssystem (OS) und/oder mindestens ein Input-Output-Modul (IOM) und/oder mindestens eine Signalverbindung und/oder mindestens einen Switch und/oder mindestens einen Router umfasst.

5. Verfahren nach einem der vorhergehenden Ansprüche, bei welchem die Risikoinformation mittels der Ausführungsumgebung (APP, IOM) oder mittels einer Vorrichtung (CS), in welcher die Ausführungsumgebung befindlich ist, oder mittels einer Software, welche in der Ausführungsumgebung läuft, ermittelt wird oder bei welchem die Risikoinformationen mittels einer mit der Ausführungsumgebung kommunikationsverbundenen Komponente ermittelt wird.

6. Verfahren nach einem der vorhergehenden Ansprüche, bei welchem die Zulässigkeitsliste (APPWL) eine Positivliste ist.

7. Verfahren nach einem der vorhergehenden Ansprüche, bei welchem die Zulässigkeitsliste (APPWL) mindestens zwei oder mehr Einträge zulässigen Workloads aufweist.

8. Verfahren nach einem der vorhergehenden Ansprüche, bei welchem die Zulässigkeitsliste (APPWL) kryptographisch geschützt wird.

9. Verfahren nach einem der vorhergehenden Ansprüche, bei welchem die Risikoinformation wiederholt, insbesondere in zeitlich konstanten Abständen oder durch Ereignisse gesteuert, ermittelt (DETTRU) wird und jeweils abhängig von der ermittelten Risikoinformation die Zulässigkeitsliste zulässigen Workloads geändert (DETWL) wird.

10. System mit einer Ausführungsumgebung (APPRTE, IOM) zum Ausführen von Workload (APP), bei welchem eine Zulässigkeitsliste (APPWL) zulässigen Workloads (APP) vorhanden ist und wobei das System zur Ausführung von Workload gemäß der Zulässigkeitsliste (APPWL) ausgebildet ist, aufweisend ein Risikoermittlungsmodul (HIC) zum Ermitteln einer Risikoinformation, kennzeichnend ein IT-Sicherheitsrisiko der Ausführungsumgebung (APPRTE, IOM), sowie ein Zulässigkeitslistenanpassungsmodul (AWA), welches ausgebildet ist, die Zulässigkeitsliste (APPWL) zulässigen Workloads (APP) abhängig von der Risikoinformation zu ändern.

11. System nach einem der vorhergehenden Ansprüche, welches eine einstückige oder einteilige oder einstückig oder einteilig handhabbare Vorrichtung (CS) bildet.

12. System nach einem der Ansprüche 10 bis 11, welches zur Ausführung eines Verfahrens nach einem der Ansprüche 1 bis 9 ausgebildet ist.
